# DEMANDE DE BREVET EUROPEEN

(11) **EP 1 710 926 A1**
(43) Date de publication de la demande: **11.10.2006**
(21) Numéro de dépôt: 06368005.2
(22) Date de dépôt: 03.04.2006
(51) Int. Cl.: H04B 1/40

(54) **Circuit de réception pour téléphone multimode reconfigurable**

(30) Priorité: 05.04.2005 FR 0503350
(71) Demandeur: STMICROELECTRONICS SA, 92120 Montrouge (FR)
(72) Inventeur: Garcia, Patrice, 38920 Crolles (FR)
(74) Mandataire: Schuffenecker, Thierry

(57) **Abrégé**

Circuit de réception pour un système de communication sans fil configurable entre un premier mode et un second mode de communication, ledit dispositif comportant :
- une antenne (201) destiné à recevoir un signal de communication ;
- un premier résonateur de type BAW (202) recevant le signal RF en sortie de l'antenne ;
- un amplificateur à faible bruit LNA (203) présentant une impédance d'entrée réglable destinée à interagir avec les caractéristiques de fonctionnement dudit premier résonateur BAW ;
- un circuit mélangeur (292 295, 206) permettant de mélanger le signal RF avec le signal d'un oscillateur local pour générer une fréquence intermédiaire (FI) ;

le réglage de l'impédance d'entrée dudit amplificateur à faible bruit permettant de régler le fonctionnement dudit circuit de réception sur ledit premier ou ledit seconde mode de communication.

## Description

### Domaine technique de l'invention

La présente invention concerne le domaine des télécommunications et plus spécialement un circuit de réception multi-mode, reconfigurable pour un système de communication sans fil .

### Etat de la technique

On constate aujourd'hui l'explosion des télécommunications dans la société moderne, et un développement sans précédent des téléphones cellulaires ,GSM et bientôt les téléphones WCDMA ...

Plus que jamais , les téléphones modernes vont être appelés à fonctionner sous divers standards, dont les futurs standards, tout en restant - et c'est un impératif constant aujourd'hui - économiques à réaliser.

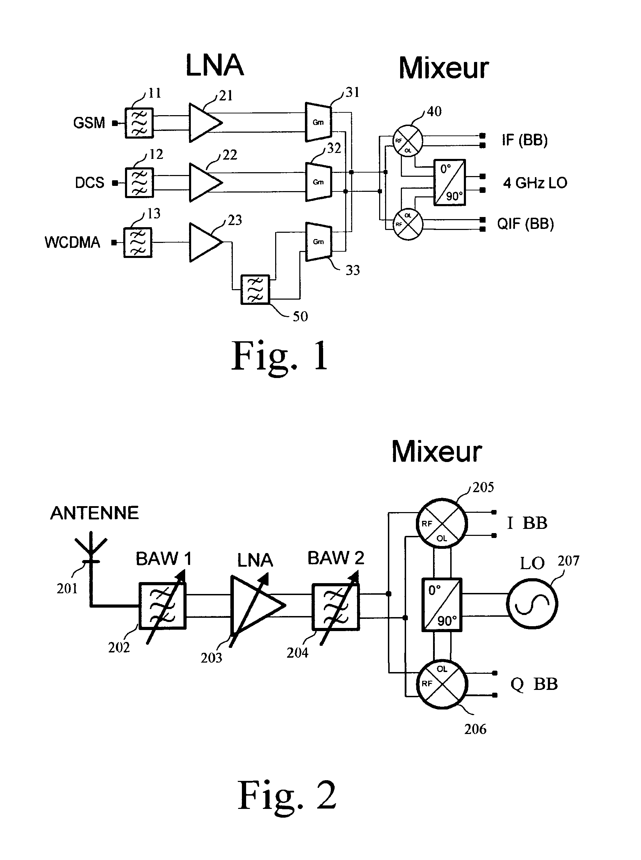

La figure 1 illustre une architecture typique d'un téléphone multi-mode, capable de fonctionner, d'une part, pour les réseaux Européens de type DCS et GSM et, d'autre part, pour le réseau américain PCS, voire pour le futur réseau WCDMA. Comme on le constate sur la figure, on parvient à se résultat en juxtaposant dans un tel téléphone un ensemble de circuits séparés pour tenir compte des fréquences distinctes propres aux différents réseaux, à savoir 950 Mhz pour le réseau GSM, 1850 Mhz pour le réseau DCS, 1950 Mhz pour le réseau PCS et 2150 Mhz pour le réseau WCDMA . Pour répondre à ces caractéristiques, on réalise classiquement un téléphone en juxtaposant plusieurs catégories de circuits propres aux différentes fréquences. On trouve ainsi trois séries de filtres 11-13 - généralement réalisés à partir de résonateurs de type Surface Acoustic Wave (S.A.W.), trois amplificateurs à faible bruit 21-23 (ou *Low Noise Amplifier* LNA) et trois amplificateurs à transconductance 31 à 33. Le circuit de réception WCDMA requiert un filtrage 50 supplémentaire en aval de l'amplificateur 23.

Bien que l'on puisse réaliser un mélangeur 40 ou mixeur commun aux trois modes, il faut donc envisager autant d'unité ou chaîne de filtrage que de fréquences de travail, et par suite de modes de communication.

La juxtaposition de plusieurs circuits distincts au sein d'une même unité est clairement un facteur d'accroissement du prix de fabrication du téléphone.

La présente invention a pour but de remédier à ce problème.

### Exposé de l'invention

La présente invention a pour but de proposer une architecture de téléphone reconfigurable, susceptible de fonctionner sous multiples modes, et qui reste économique à fabriquer.

Un autre but de la présente invention consiste à réduire la complexité des téléphones sans fil en proposant un circuit de réception et un circuit d'émission pour un téléphone reconfigurable basé sur un unique circuit résonateur.

C'est un autre but de la présente invention que de réaliser un circuit de réception et un circuit d'émission pour un téléphone cellulaire basé sur un unique résonateur de type BAW permettant de couvrir plusieurs modes de communication.

L'invention réalise ces buts au moyen d'un circuit de réception pour un système de communication sans fil configurable entre un premier mode et un second mode de communication, ledit dispositif comportant :
- une antenne destiné à recevoir un signal de communication ;
- un premier résonateur de type BAW recevant le signal RF en sortie de l'antenne ;
- un amplificateur à faible bruit LNA présentant une impédance d'entrée réglable destinée à interagir avec les caractéristiques de fonctionnement dudit premier résonateur BAW ;
- un circuit mélangeur permettant de mélanger le signal RF avec le signal d'un oscillateur local pour générer une fréquence intermédiaire (FI) ;
le réglage de l'impédance d'entrée dudit amplificateur à faible bruit permettant de régler le fonctionnement dudit circuit de réception sur ledit premier ou ledit seconde mode de communication.

Le réglage de l'impédance d'entrée du circuit LNA permet ainsi de venir fixer les caractéristiques de fonctionnement du premier résonateur BAW de manière à permettre le fonctionnement du circuit pour ledit premier ou ledit second mode. On peut ainsi, avec un même circuit, couvrir les modes DCS, GSM, PCS...

De préférence, le circuit comporte, entre l'amplificateur à faible bruit et le mélangeur un second résonateur BAW de manière à permettre, en plus, le fonctionnement dans un mode WCDMA.

Dans un mode de réalisation préféré, l'amplificateur à faible bruit comporte une structure différentielle à transconductance dont on vient régler le point de polarisation pour fixer l'impédance d'entrée.

De préférence, l'amplificateur à transconductance comporte :
- un premier transistor bipolaire comportant une base, un émetteur et un collecteur ;
- un second transistor bipolaire comportant une base, un émetteur et un collecteur, lesdits émetteurs et collecteurs dudit second transistor étant respectivement connectés audit émetteur et collecteur dudit premier transistor ;
- un troisième transistor bipolaire comportant une base, un émetteur et un collecteur ;
- un quatrième transistor bipolaire comportant une base, un émetteur et un collecteur ; lesdits émetteurs et collecteurs dudit quatrième transistor étant respectivement connectés audit émetteur et collecteur dudit troisième transistor ;
- une source de courant présentant une première électrode et une seconde électrode connectée à un potentiel de référence ;
- une première inductance comportant une première électrode connectée aux émetteurs desdits premier et second transistors et comportant une seconde électrode connectée à la première électrode de ladite source de courant ;
- une seconde inductance comportant une première électrode connectée aux émetteurs desdits troisième et quatrième transistors et comportant une seconde électrode connectée à la première électrode de ladite source de courant ;
- une première résistance connectée entre la base dudit premier transistor et un potentiel de commande V2 ;
- une seconde résistance connectée entre la base dudit second transistor et un potentiel de commande V1 ;
- une troisième résistance connectée entre la base dudit troisième transistor et le potentiel V2 ;
- une seconde résistance connectée entre la base dudit quatrième transistor et le potentiel de commande V1 ;
- une première capacité de découplage connectée entre la base dudit premier transistor et la composante en phase du signal RF ;
- une seconde capacité de découplage connectée entre la base dudit second transistor et la composante en phase du signal RF ;
- une troisième capacité de découplage connectée entre la base dudit troisième transistor et la composante en opposition de phase du signal RF ;
- une quatrième capacité de découplage (418) connectée entre la base dudit quatrième transistor (412) et la composante en opposition de phase du signal RF ;

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre une architecture connue d'un téléphone multi-mode reconfigurable.
La figure 2 illustre un mode de réalisation préféré d'un circuit de réception selon l'invention permettant la réception de signaux WCDMA.
La figure 3 illustre un autre mode de réalisation dans lequel on insère une boucle PLL pour la commande des résonateurs BAW2 et BAW3.
La figure 4 illustre un mode de réalisation du circuit amplificateur à faible bruit.
La figure 5 illustre un mode de réalisation du circuit amplificateur intégrant un second résonateur BAW entre les électrodes de collecteur des deux paires différentielles.

### Description d'un mode de réalisation préféré

On décrit en référence à la figure 2 un circuit de réception conformément à la présente invention. Le circuit comporte une antenne 201 , suivie d'un premier composant BAW1 202 recevant le signal RF en sortie de l'antenne . Comme on le sait, un composant BAW (*Bulk Acoustic Resonator*) est un résonateur disposé à l'intérieur d'un volume délimité entre une électrode inférieure et une électrode supérieure en sorte que l'onde acoustique se développe dans ce même volume. En aval du composant BAW1 202, le circuit comporte un amplificateur à faible bruit LNA 203 destiné à amplifier le signal RF .

Suivant la présente invention, l'amplificateur à faible bruit 203 est choisi de manière à présenter une impédance réglable de manière à venir interagir avec les caractéristiques de fréquence du composant BAW1 202.

Dans le mode de réalisation préféré, on intercale ensuite un second composant BAW 204, lequel sert au mode de communication WCDMA. On prévoit un système de désactivation de ce second BAW 204 car ce composant n'est requis que pour le format WCDMA et non pour les formats GSM-DCS ou PCS.

Le circuit de réception comporte, ensuite, un circuit mélangeur ou mixeur qui comporte un oscillateur local LO 207 (fixé par exemple à 2 Ghz) permettant de générer un signal OL qui est ensuite mélangé, en phase et en quadrature, au signal RF et ce au moyen de deux mélangeurs 205 et 206 afin de générer, en sortie, les deux composantes de la fréquence intermédiaire FI.

On a constaté, et c'est un des éléments surprenants de l'invention, qu'en utilisant un circuit amplificateur LNA présentant une impédance réglable, il est possible de venir interagir directement avec les caractéristiques du circuit BAW 202 et, par suite, de venir déterminer la fréquence de travail.

Afin de faire varier la fréquence de travail du filtre BAW constitué du résonateur BAW 302 unique, on insère en premier lieu une inductance intégrée en parallèle sur le BAW afin d'assurer l'annulation de la fréquence de résonance parallèle. En simulation, on montre que l'on parvient à un facteur de qualité de 30, ce qui est convenable. En second lieu, on vient ajuster la fréquence de résonance série au moyen d'une capacité, laquelle est réalisée au moyen d'une capacité parasite de sortie d'un transistor. Plus particulièrement les capacités Csub et Cbc, respectivement capacité collecteur-substrat et collecteur-base (de la jonction b-C polarisée en inverse). Il est à noter que l'on peut venir ajuster la valeur de cette capacité en ajustant la surface du transistor. Dans la pratique, Il est envisage de placer une matrice de transistor en parallèle ; ces derniers étant commandés par leurs tensions de base par des bits de commande.

Il est important de noter que l'écart entre les fréquences centrales sera d'autant plus élevé que le rapport des capacités de sortie des transistors Csub et Cbc sera grand. Cette limitation est identique a celle observée dans les oscillateurs commandés en tension par varactor. En d'autres termes, ce type de montage permettra de couvrir deux standards de réception de plus en plus espaces en fréquence, à condition toutefois que les deux conditions soient réunies :
1) La capacité parasite collecteur-substrat Csub doit être faible
2) La capacité de jonction Cbc base-collecteur doit présenter une grande sensibilité à la tension base-émetteur.

On peut dès lors envisager un unique BAW 302 pour répondre au cahier des charges de plusieurs modes de communication, dont le DCS, GSM, PCS et le WCDMA. Il n'est plus nécessaire d'envisager autant de chaînes de filtrage que de modes de communication. Le coût de fabrication du circuit de réception est, dès lors, considérablement réduit.

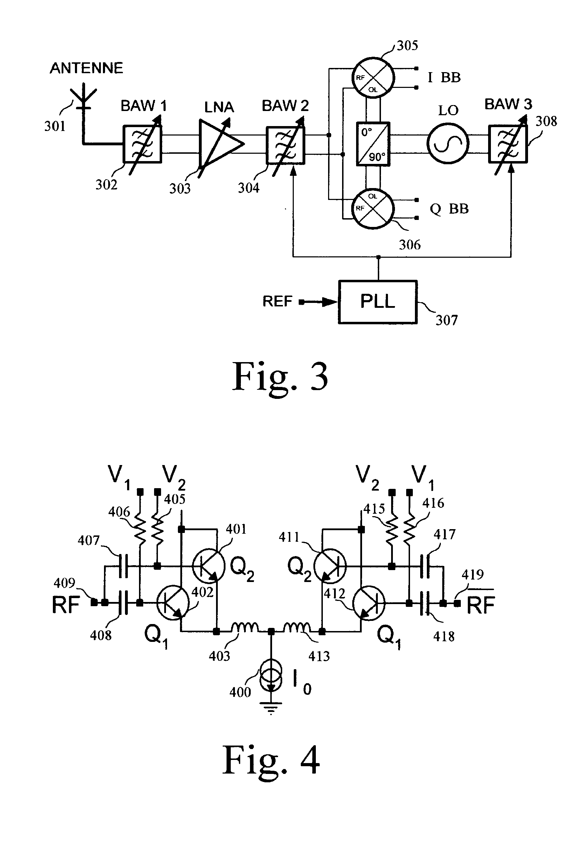

La figure 3 montre un autre mode de réalisation de l'invention dans lequel on vient insérer dans la structure décrite un troisième résonateur BAW 308 et un circuit de verrouillage de phase PLL (Phase Locked Loop) 307. On retrouve ainsi un circuit de réception comportant une antenne 301, un premier BAW 302, un amplificateur à faible bruit LNA 303, un second circuit BAW 304 débrayable et un circuit mélangeur ou mixeur basé sur les mélangeurs 305 et 306. Comme on le voit sur la figure, le circuit PLL 307 vient régler la fréquence du BAW 304 ainsi que celle du BAW 308 . Le circuit PLL 307 sert donc à calibrer la réponse en fréquence du filtre complet. Ce calibrage est basée sur un principe maître-esclave dans lequel le filtre complet sert à régler la fréquence de travail d'un oscillateur, ce dernier étant asservi par une boucle à verrouillage de phase. La fréquence d'oscillation correspondra ainsi à la fréquence de résonance du filtre ; La tension de commande du circuit PLL est alors réutilisée pour venir ajuster précisément la fréquence de résonance du résonateur.

Dans un mode de réalisation préféré, on réalise le circuit amplificateur LNA au moyen d'une structure diuérentielle d'amplification à transconductance dont on vient fixer le point de polarisation de manière à venir régler l'impédance d'entrée du circuit.

Un mode de réalisation préféré d'un amplificateur à faible bruit est illustré en figure 4 ou l'on voit une première paire différentielle composée de transistors bipolaires 401 et 411 (Q1), par exemple de type NPN, associée à une deuxième paire différentielle (Q2) composée de transistors 402 et 412, également de type NPN. Un homme du métier pourra clairement adapter le circuit à des transistors de type opposé, soit PNP.

Le transistor 401 (resp. 402) présente une base qui est connectée à une première électrode d'une résistance 405 (resp. 406) et à une première électrode d'une capacité de découplage 407 (408). De la même manière, le transistor 411 (resp. 412) présente une base qui est connectée à une première électrode d'une résistance 415 (resp. 416) et à une première électrode d'une capacité de découplage 417 (resp. 419).

Les transistors 401 et 402 (resp. 411 et 412) présentent une électrode d'émetteur qui est connectée à une première électrode d'une inductance 403 (resp. 413), dont une seconde électrode est à la masse via une source de courant 400 délivrant un courant 10.

Les collecteurs des transistors 401 et 402 (resp. 411 et 412) sont connectés à une première électrode de sortie (resp. une seconde électrode) de l'amplificateur différentiel.

Les capacités de découplages 407 et 408 disposent d'une seconde électrode qui vient recevoir la première moitié du signal RF.

Les capacités de découplage 417 et 418 disposent d'une seconde électrode qui vient recevoir la seconde moitié, en opposition de phase, du signal RF.

Enfin les résistances 405 et 415 présentent une seconde électrode recevant un potentiel V2 de commande. De la même manière, ies résistances 406 et 416 disposent d'une seconde électrode recevant un potentiel V1.

Le circuit d'amplification à faible bruit de la figure 4 est tel qu'en venant commander les potentiels V1 ou V2, on peut venir modifier le point de polarisation des transistors Q1 et Q2 et, par suite, régler l'impédance d'entrée du circuit LNA.

Ainsi, cette impédance vient interagir avec les caractéristiques du BAW 202 pour, finalement, permettre le réglage de la fréquence de travail du circuit de réception.

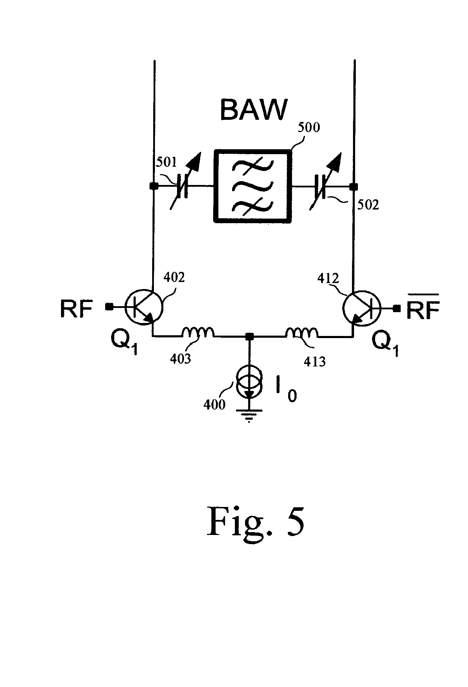

En référence à la figure 5, on décrit à présent un mode de réalisation dans lequel on vient connecter , entre les collecteurs de la paire de transistors 402 et 412, un circuit comportant, en série, une première capacité 501 réglable, suivie d'un résonateur de type BAW 500, suivie ensuite d'une seconde capacité réglable 502.

On peut ainsi réaliser, de manière très simple, le circuit de réception doté des éléments 202, 203 et 204.

Ce circuit peut être utilisé très simplement pour réaliser un téléphone multi-mode, reconfigurable, utilisant une chaîne de réception commune pour tous les modes.

## Revendications

1. Circuit de réception pour un système de communication sans fil configurable entre un premier mode et un second mode de communication, ledit dispositif comportant :
- une antenne (201) destiné à recevoir un signal de communication ;
- un premier résonateur de type BAW (202) recevant le signal RF en sortie de l'antenne ;
- un amplificateur à faible bruit LNA (203) présentant une impédance d'entrée ou de sortie réglable destinée à interagir avec les caractéristiques de fonctionnement dudit premier résonateur BAW ;
- un circuit mélangeur (292 295, 206) permettant de mélanger le signal RF avec le signal d'un oscillateur local pour générer une fréquence intermédiaire (FI) ;
le réglage de l'impédance d'entrée dudit amplificateur à faible bruit permettant de régler le fonctionnement dudit circuit de réception sur ledit premier ou ledit seconde mode de communication.

2. Circuit de réception selon la revendication 1 **caractérisé en ce qu'**il comporte, entre ledit circuit amplificateur à faible bruit (203) et le circuit mélangeur un second BAW permettant le fonctionnement dans un mode WCDMA.

3. Circuit selon la revendication 1 **caractérisé en ce que** ledit amplificateur à faible bruit comporte une structure différentielle à transconductance dont on vient régler le point de polarisation ou le nombre d'éléments placés en parallèle pour fixer l'impédance d'entrée.

4. Circuit selon la revendication 1 **caractérisé en ce que** ledit premier mode et le dit second mode de fonctionnement sont choisis parmi les modes suivants : DCS, GSM, PCS ou WCDMA.

5. Circuit selon la revendication 3 **caractérisé en ce que** ledit amplificateur à faible bruit comporte :
- un premier transistor bipolaire (401) comportant une base, un émetteur et un collecteur ;
- un second transistor bipolaire (402) comportant une base, un émetteur et un collecteur, lesdits émetteurs et collecteurs dudit second transistor étant respectivement connectés audit émetteur et collecteur dudit premier transistor ;
- un troisième transistor bipolaire (411) comportant une base, un émetteur et un collecteur ;
- un quatrième transistor bipolaire (412) comportant une base, un émetteur et un collecteur ; lesdits émetteurs et collecteurs dudit quatrième transistor étant respectivement connectés audit émetteur et collecteur dudit troisième transistor ;
- une source de courant (400) présentant une première électrode et une seconde électrode connectée à un potentiel de référence ;
- une première inductance (403) comportant une première électrode connectée aux émetteurs desdits premier et second transistors et comportant une seconde électrode connectée à la première électrode de ladite source de courant ;
- une seconde inductance (413) comportant une première électrode connectée aux émetteurs desdits troisième et quatrième transistors et comportant une seconde électrode connectée à la première électrode de ladite source de courant ;
- une première résistance (405) connectée entre la base dudit premier transistor (401) et un potentiel de commande V2 ;
- une seconde résistance (406) connectée entre la base dudit second transistor (402) et un potentiel de commande V1 ;
- une troisième résistance (415) connectée entre la base dudit troisième transistor (411) et le potentiel V2 ;
- une seconde résistance (406) connectée entre la base dudit quatrième transistor (412) et le potentiel de commande V1 ;
- une première capacité de découplage (407) connectée entre la base dudit premier transistor (401) et la composante en phase du signal RF ;
- une seconde capacité de découplage (408) connectée entre la base dudit second transistor (402) et la composante en phase du signal RF ;
- une troisième capacité de découplage (417) connectée entre la base dudit troisième transistor (411) et la composante en opposition de phase du signal RF ;
- une quatrième capacité de découplage (418) connectée entre la base dudit quatrième transistor (412) et la composante en opposition de phase du signal RF ;
la commande V1 ou V2 permettant de venir régler l'impédance d'entrée dudit amplificateur à faible bruit.

6. Circuit selon la revendication 5 **caractérisé en ce que** lesdits premier, second, troisième et quatrième transistors sont des transistors bipolaires de type NPN.

7. Circuit selon la revendication 5 **caractérisé en ce que** lesdits premier, second, troisième et quatrième transistors sont des transistors bipolaires de type NPN.

8. Circuit selon la revendication 5 **caractérisé en ce qu'**un circuit comportant en série une première capacité variable (501), un résonateur BAW et une seconde capacité variable (502) est connectée entre les collecteurs desdits second et quatrième transistors (402, 412).

9. Téléphone cellulaire comportant le dispositif de réception définis dans l'une des revendications précédentes.
